# FASCICULE DE BREVET EUROPEEN

(11) **EP 2 071 133 B1**
(45) Date de publication et mention de la délivrance du brevet: **13.06.2018**
(21) Numéro de dépôt: 08170962.8
(22) Date de dépôt: 08.12.2008
(51) Int. Cl.: F01D 11/18, F01D 17/10, F01D 25/14, F01D 25/24, F02C 6/08

(54) **Module de turbomachine muni d'un dispositif d'amélioration des jeux radiaux**
Turbotriebwerksmodul, das mit einer Vorrichtung zur Verbesserung des Radialspiels ausgestattet ist
Turbomachine module equipped with a device for improving radial play

(30) Priorité: 14.12.2007 FR 0708709
(43) Date de publication de la demande: 17.06.2009
(73) Titulaire: Snecma, 75015 Paris (FR)
(72) Inventeur: Brunet, Antoine, 77550 Moissy Cramayel (FR); Chomel, Claude, 91720 Maisse (FR); Juste, Sébastien, 77310 Saint Fargeau Ponthierry (FR); Houradou, Emmanuel, 75012 Paris (FR); Raulin, Dominique, 77310 Saint Fargeau Ponthierry (FR); Renault, Frédéric, 91610 Ballancourt (FR); Sedlak, Julien, 75002 Paris (FR)
(74) Mandataire: Ilgart, Jean-Christophe

(56) Documents cités:
- EP-A- 1 059 420
- EP-A- 1 698 761
- US-A- 5 562 408
- US-A- 5 653 581

## Description

La présente invention concerne un module de turbomachine comportant un dispositif d'amélioration des jeux radiaux. L'invention s'applique aux turbomachines, et notamment aux turboréacteurs d'aéronefs et aux turbopropulseurs d'aéronefs.

Une turbomachine est généralement constituée d'un ensemble de trois modules : un module compresseur, un module chambre et un module turbine. Le module compresseur permet de comprimer un flux d'air traversant le compresseur de l'amont vers l'aval de la turbomachine. Le module turbine permet de détendre un flux d'air comprimé traversant la turbine de l'amont vers l'aval de la turbomachine et de transmettre la puissance récupérée par la détente des gaz vers le compresseur. Le module compresseur et le module turbine sont constitués d'un rotor, d'un carter interne et d'un carter externe entourant le carter interne. Le rotor comprend au moins un disque muni d'une pluralité d'aubes réparties circonférentiellement. Des viroles sont placées en vis-à-vis des aubes et sont assemblées pour constituer le carter interne du compresseur. Le carter interne est relié à une virole fixe externe constituant le carter externe par l'intermédiaire d'un ou plusieurs anneaux amortisseurs.

Le sommet d'une aube mobile d'un disque rotor est espacé de la virole du carter interne en vis à vis par un jeu radial. Le jeu radial doit être réduit autant que possible pour améliorer les performances de la turbomachine. Cependant, en fonctionnement et notamment lors du passage entre les différents régimes de fonctionnement de la turbomachine, le jeu radial varie en raison des différences de dilatation thermique entre le rotor et le carter interne d'une part, entre les carters interne et externe d'autre part, et surtout en raison de la différence des vitesses de dilatation des anneaux amortisseurs par rapport aux carters interne et externe. En effet, pour ne pas pénaliser la masse de la turbomachine, les anneaux amortisseurs sont des pièces beaucoup moins massives que les carters interne et externe. L'inertie thermique de ces anneaux amortisseurs est donc beaucoup plus faible que celle des carters ce qui provoque des modifications de la position du carter interne et une augmentation ou une diminution des jeux radiaux entre les aubes mobiles et le carter interne. La variation de ces jeux radiaux a pour résultat une diminution des rendements de la turbomachine ainsi qu'une usure des sommets des aubes et de la surface des viroles.
Des dispositifs d'amélioration des jeux radiaux d'une turbomachine sont connus de l'art antérieur, notamment dans les documents US 5 330 321, US 6 035 929, EP 1 698 761 considéré comme l'état de la technique antérieure le plus proche et GB 2 388 407. Cependant, tous ces dispositifs sont des dispositifs actifs de pilotage du jeu, ce qui implique que pour leur fonctionnement, il est nécessaire de prélever une partie du débit d'air entrant dans la turbomachine. Or, ce prélèvement d'air nuit au rendement de la turbomachine, puisqu'il se déduit de l'air en sortie du compresseur. Par ailleurs, ces dispositifs nécessitent des aménagements particuliers de la turbomachine par ajout de pièces volumineuses et/ou par ajout de pièces complexes à réaliser industriellement.

La présente invention a pour objectif de remédier aux inconvénients décrits ci-dessus et de réaliser un module de turbomachine muni d'un dispositif d'amélioration des jeux radiaux simple à mettre en oeuvre, ne nécessitant pas de modification structurelle importante, ne nécessitant pas de prélever un débit d'air ni d'ajouter des pièces complexes, permettant d'avoir une action locale à proximité des jeux radiaux et permettant de réduire localement les effets indésirables dus à la dilatation trop rapide de l'anneau amortisseur par rapport aux aubes de disque rotor en harmonisant les temps de réponse et les amplitudes de déplacement du carter interne par rapport au rotor.

Pour cela, selon l'invention, il est prévu un module de turbomachine muni d'un dispositif d'amélioration des jeux radiaux, comportant un carter externe, un carter interne traversé par un flux primaire de turbomachine, et au moins un anneau amortisseur reliant lesdits carters, ledit module comportant en outre, vers l'aval par rapport audit anneau amortisseur, une cavité annulaire présentant un passage assurant le prélèvement d'un flux sur ledit flux primaire. Selon l'invention, le dispositif d'amélioration des jeux radiaux comporte un dispositif de maîtrise de l'inertie thermique de l'anneau amortisseur monté sur l'anneau amortisseur, vers l'aval par rapport à ce dernier, ce dispositif de maîtrise de l'inertie thermique comportant au moins une couche d'isolant thermique, et délimitant au moins en partie, en aval de celui-ci, ladite cavité annulaire.

L'invention permet avantageusement, en particulier grâce à la couche d'isolant thermique, d'augmenter le temps nécessaire à l'anneau amortisseur pour changer de température, et permet donc d'harmoniser la vitesse de dilatation de l'anneau amortisseur avec celles du carter interne et du carter externe.

Préférentiellement, la couche d'isolant thermique est au contact d'une surface intérieure d'un bras annulaire intérieur de l'anneau amortisseur.

Avantageusement, le dispositif de maîtrise de l'inertie thermique comporte en outre une tôle de couverture montée sur un bras annulaire intérieur de l'anneau amortisseur et une cavité située entre la tôle de couverture et le bras intérieur, la couche d'isolant thermique étant logée dans la cavité.

Alternativement, la couche d'isolant thermique est un revêtement thermique déposé sur la surface intérieure du bras intérieur de l'anneau amortisseur.

L'invention se rapporte également à une utilisation du module de turbomachine décrit ci-dessus au niveau du compresseur de la turbomachine ou au niveau de la turbine de la turbomachine.

Enfin, l'invention a pour objet une turbomachine comportant au moins un module tel que décrit ci-dessus.

L'invention sera mieux comprise et ses avantages apparaîtront clairement à la lecture de la description détaillée qui suit, donnée à titre d'exemple non limitatif et en référence aux figures annexées qui représentent respectivement :
- La figure 1, une vue en coupe axiale d'un exemple de turbomachine, selon l'art antérieur,
- La figure 2, une vue en coupe axiale d'un exemple de compresseur de turbomachine selon l'art antérieur,
- Les figures 3a, 3b, 3c des vues en coupe axiale d'un premier mode de réalisation de l'invention,
- Les figures 4, 5, 6, des vues en coupe axiale de trois variantes du premier mode de réalisation de l'invention,
- La figure 7 une vue en coupe axiale d'un second mode de réalisation de l'invention.

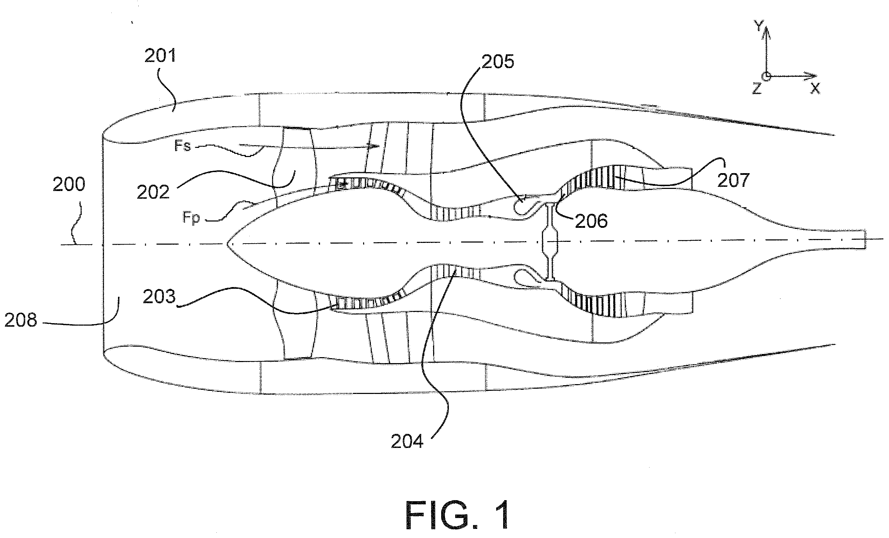

La figure 1 illustre un exemple de turbomachine intégrée dans une nacelle 201 entourant la turbomachine. La turbomachine comporte d'amont en aval :
une entrée d'air 208, une soufflante 202 comportant une pluralité d'aubes montées sur un premier disque de rotor, un compresseur basse pression 203 comportant au moins un rotor aubagé et un stator, un compresseur haute pression 204 comportant au moins un rotor aubagé et un stator, une chambre de combustion 205, une turbine haute pression 206 comportant au moins un rotor aubagé et un stator, une turbine basse pression 207 comportant au moins un rotor aubagé et un stator.

L'axe 200 constitue l'axe de rotation de la turbomachine.

Dans l'exemple de turbomachine représenté, l'air extérieur entre par l'entrée d'air 208 et traverse les aubes de soufflante 202. En sortie des aubes de soufflante le flux d'air est séparé en deux flux. Un premier flux appelé flux primaire Fp est dirigé vers l'entrée du compresseur basse pression 203 et un deuxième flux appelé flux secondaire Fs dirigé vers l'arrière de la turbomachine. Le compresseur basse pression 203 comprime une première fois le flux d'air primaire Fp puis le dirige vers le compresseur haute pression 204. Ce dernier comprime une deuxième fois le flux primaire Fp avant de l'insuffler dans la chambre de combustion 205. Une partie du flux primaire Fp traversant le compresseur haute pression est prélevé pour les besoins en air de la turbomachine mais également pour les besoins en air comprimé de l'aéronef.
Dans la chambre de combustion 205 le flux primaire Fp est porté à très haute température. En sortie de la chambre de combustion 205, le flux d'air chaud est injecté dans la turbine haute pression 206 puis dans la turbine basse pression 207 qui transforment la détente des gaz chauds en énergie mécanique. La puissance récupérée par la turbine haute pression 206 permet d'entraîner le compresseur haute pression 204 par l'intermédiaire d'un premier arbre axial. La turbine basse pression 207 permet d'assurer la rotation du compresseur basse pression 203 et des aubes de soufflante 202 par l'intermédiaire d'un deuxième arbre axial concentrique au premier arbre.

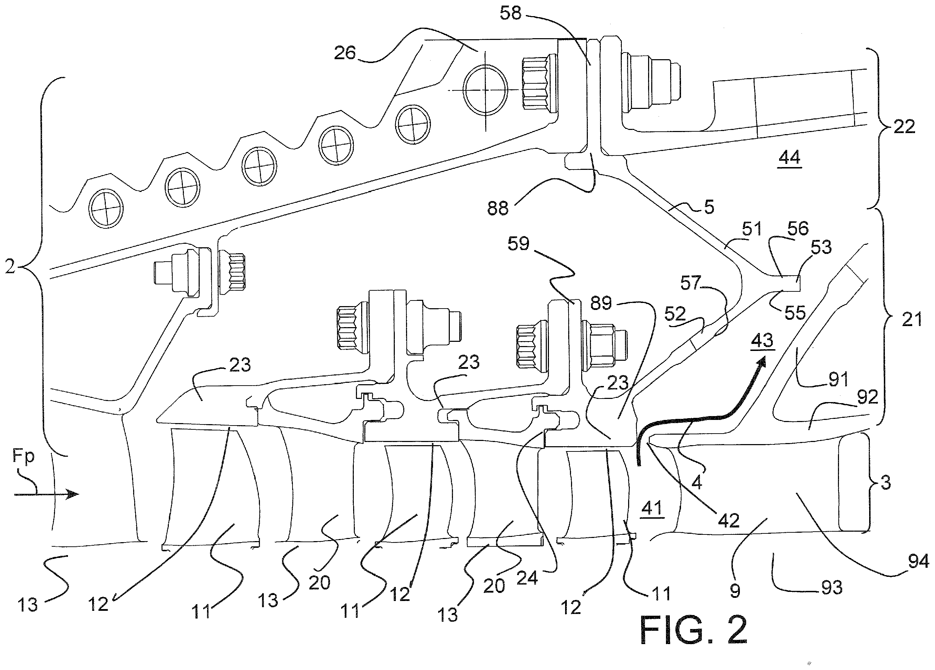

La figure 2 représente une vue en coupe axiale d'un exemple de compresseur selon l'art antérieur. Le compresseur comporte un ensemble rotatif ou rotor 3 comportant une pluralité de disques munis chacun d'une pluralité d'aubes 11 réparties circonférentiellement en périphérie de chaque disque.

Le compresseur comporte également un ensemble fixe ou stator 2 comportant une pluralité de redresseurs fixes 20. Chaque redresseur est constitué d'une pluralité d'aubes fixes 20 fixées par une extrémité inférieure à une virole intérieure annulaire 13 et par une extrémité supérieure à une virole extérieure annulaire 24. Les viroles extérieures 24 sont reliées entre elles par des anneaux 23 comportant un revêtement isolant thermiquement et abradable. L'ensemble des viroles extérieures 24 des différents redresseurs et des anneaux abradables 23 forme le carter interne 21 du compresseur.

Le stator 2 comporte également un carter externe 22 constitué par un ensemble de viroles annulaires externes 26.

Les sommets des aubes 11 du rotor 3 sont espacés de l'anneau abradable 23 en vis à vis par des jeux radiaux 12.

Le carter interne 21, traversé par le flux primaire Fp qu'il délimite radialement vers l'extérieur, est relié au carter externe 22 par au moins un anneau amortisseur 5. Dans cet exemple, l'anneau amortisseur 5 est constitué d'une épingle annulaire comportant deux extrémités respectivement supérieure 88 et inférieure 89, un bras extérieur annulaire 51, un bras intérieur annulaire 52 et une jambe de renfort 53 cylindrique. Les bras intérieur 52 et extérieur 51 sont reliés entre eux de façon à former un V ou un U dont la pointe est dirigée vers l'aval du compresseur. A cet égard, il est noté que le terme aval est à considérer par rapport à une direction générale d'écoulement des gaz à travers la turbomachine. La jambe de renfort cylindrique 53, comportant une face intérieure 55 et une face extérieure 56, est située dans le prolongement des deux bras intérieur et extérieur et est solidaire de la jonction des bras intérieur et extérieur. Le bras extérieur 51 de l'anneau amortisseur 5 est relié au carter externe par une première bride annulaire 58. Le bras intérieur 52 de l'anneau amortisseur 5 est relié aux viroles externes 24 du carter intérieur par une deuxième bride annulaire 59.
Sur l'exemple de la figure 2, les brides 58 et 59 sont solidaires des extrémités supérieure 88 et inférieure 89 de l'anneau amortisseur. La bride 59 est en outre solidaire de l'un des anneaux 23 ce qui permet l'attache de l'anneau amortisseur 5 avec les autres viroles du carter interne 21.

A l'aval du carter interne 21 se trouve un diffuseur 9 dont le rôle est de diriger le flux primaire Fp issu du compresseur vers la chambre de combustion. Le diffuseur 9 est une pièce fixe annulaire constituée par une pluralité d'aubes 94 reliées entre elles par une virole interne de diffuseur 93 et par une virole externe 92 de diffuseur. Le diffuseur 9 est relié au carter extérieur 22 par un bras annulaire 91. Le carter interne 21 est espacé de la virole externe 92 du diffuseur par un jeu axial, dit passage 42. Ce jeu 42 permet l'écoulement d'un flux d'air 4 prélevé du flux primaire Fp au travers de la cavité 41 située entre le compresseur et le diffuseur. Par ailleurs, l'espace entre le bras intérieur 52 de l'anneau amortisseur et les bras 91 du diffuseur 9 forme une cavité annulaire 43 au travers de laquelle s'écoule le flux d'air 4.

Le flux d'air 4 est un prélèvement d'air utilisé pour divers besoins tels que le dégivrage des ailes des aéronefs ou le refroidissement de certains composants de la turbomachine. Le flux d'air 4 est prélevé dans la cavité 41, puis il débouche dans la cavité 43 et vient en contact avec la face intérieure 57 du bras intérieur 52 de l'anneau amortisseur 5 et réchauffe ou refroidit ce dernier. Puis ce flux débouche dans une cavité annulaire 44 située entre le bras extérieur 51 de l'anneau amortisseur 5 et le carter externe 22.

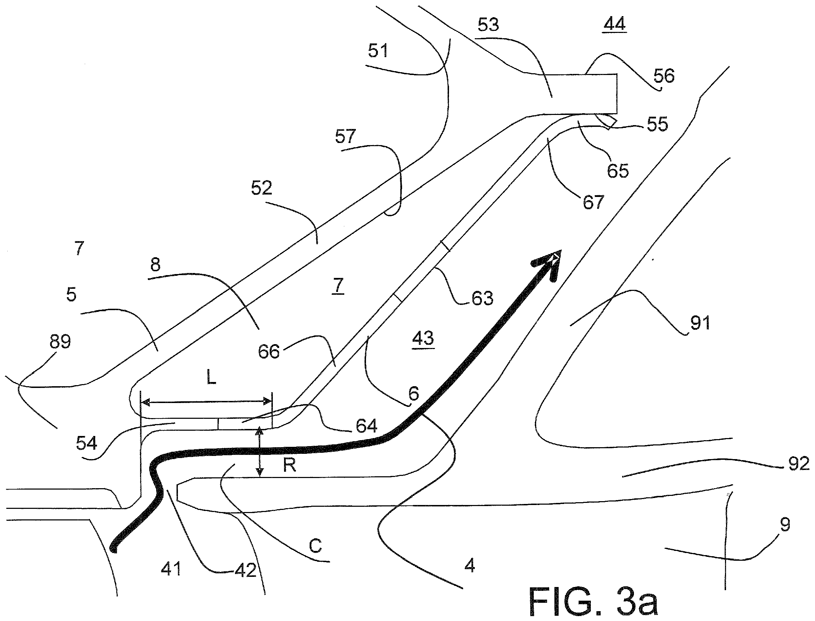

La figure 3a représente une vue détaillée d'un premier mode de réalisation de l'invention. Selon ce premier mode de réalisation de l'invention, l'anneau amortisseur 5 est équipé d'un dispositif permettant la maîtrise de son inertie thermique, placé de préférence au contact et en aval de la surface intérieure 57 de son bras intérieur 52, en regard de la virole extérieure 92 et du bras annulaire 91 du diffuseur 9. Le dispositif de maîtrise de l'inertie thermique comprend une couche d'isolant thermique 8 en contact avec le bras intérieur 52 de l'anneau amortisseur 5, et agencé en aval de ce bras. Le dispositif de maîtrise de l'inertie thermique comporte également une tôle de couverture annulaire 6 comportant une extrémité amont 64 et une extrémité aval 65 reliées respectivement à l'extrémité inférieure 89 de l'anneau amortisseur 5 et à la jambe de renfort 53 de l'anneau amortisseur 5.

La tôle de couverture annulaire 6, placée en aval du bras intérieur 52, recouvre ainsi la face intérieure 57 de ce bras 52 en laissant subsister un espace de façon à créer une cavité annulaire 7 entre elles. La cavité 7 est remplie d'au moins un matériau isolant thermique 8 tel que par exemple l'air, la fibre de verre, du feutre de laine de silice ou tout autre matériau connu pour ses propriétés d'isolation thermique, afin de former ladite couche d'isolant thermique. La tôle de couverture 6 permet de maintenir le matériau isolant en place. La tôle de couverture 6 est munie d'une unique ouverture 63 qui permet à l'air chaud issu du flux d'air 4 de remplir la cavité 7 et d'équilibrer les pressions entre les cavités 7 et 43. De préférence, la surface de la section de la cavité 7, selon un plan de coupe passant par l'axe de la turbomachine, est au moins cinq fois supérieure à la surface équivalente de l'ouverture 63. En effet, dans la cavité 7, la pression de l'air varie de 1 à 25 bars, en fonction de la température ambiante dans le compresseur. Pour éviter la déformation des pièces attenantes à la cavité 7, il est nécessaire de réguler la pression interne de la cavité. L'ouverture 63 est unique. Une seconde ouverture dans la tôle de couverture 6 créerait une circulation d'air entre les deux ouvertures et empêcherait l'air contenu dans la cavité 7 de jouer son rôle d'isolant thermique. A titre d'exemple, pour une tôle de couverture annulaire 6 ayant une épaisseur comprise entre 0,3 et 2mm, la section de l'ouverture 63 représente une surface comprise entre 1 et 200mm².

La tôle de couverture 6 est préférentiellement montée sur le bras intérieur 52 car c'est la partie de l'anneau amortisseur 5 la plus exposée au flux d'air 43 et la plus sujette aux variations de température.

De préférence, l'extrémité inférieure 89 de l'anneau amortisseur 5 comporte une bride axiale 54 et l'extrémité amont 66 de la tôle de couverture 6 comporte une bride axiale 64 de même diamètre que la bride axiale 54 de l'anneau amortisseur 5. Les deux brides 54 et 64 sont liées par exemple par un procédé de soudure quelconque comme le TIG ou par tout autre moyen permettant une liaison durable entre les éléments.

L'extrémité aval 67 de la tôle de couverture 6 est constituée d'une patte annulaire 65 venant en appui simple sur la face intérieure 55 de la jambe de renfort 53. La tôle de couverture 6 est ainsi mise en contact avec la jambe de renfort 53. Les dimensions et l'épaisseur de la tôle sont choisies de telle manière que le contact entre les deux pièces soit étanche à l'air par effet ressort, par exemple en réalisant la patte annulaire 65 avec un diamètre supérieur au diamètre de la face intérieure 55 de la jambe de renfort 53.

La couche d'isolant thermique 8 emprisonnée dans la cavité 7 permet d'augmenter l'inertie thermique de l'anneau amortisseur 5. En effet, la couche d'isolant thermique 8 isole l'anneau amortisseur 5 du flux d'air 4 et retarde la montée en température de l'anneau amortisseur 5. Ce dispositif ne vise toutefois pas à isoler complètement l'anneau amortisseur 5. Le dispositif selon l'invention permet d'ajuster l'inertie thermique de l'anneau amortisseur 5 par l'ajustement du volume de la cavité 7 et de la section de l'ouverture 63. Le volume de la cavité 7 peut être ajusté en rapprochant ou en écartant la tôle de couverture 6 de l'anneau amortisseur 5. Plus le volume de la cavité 7 est important, plus l'inertie thermique de l'anneau amortisseur 5 est importante. Plus la section de l'ouverture 63 est importante plus l'inertie thermique de l'anneau amortisseur 5 est faible.

Par ailleurs, ce premier mode de réalisation de l'invention offre un avantage supplémentaire. Les brides 54 et 64 forment un cylindre de longueur L parallèle à la virole extérieure 92 du diffuseur 9 et à l'axe 208 de la turbomachine. Ce cylindre de longueur L est espacé de la virole extérieure 92 du diffuseur d'une distance radiale R et forme ainsi une chicane axiale C. Le flux d'air 4 est d'abord contraint à un écoulement radial lors de son passage au travers du jeu 42. Puis le flux d'air 4 est contraint à un écoulement au travers d'une première restriction formée par la chicane axiale C entre les brides cylindriques 54 et 64 et la virole 92 avant de déboucher sur la cavité 43 comprise entre la tôle de couverture 6 et le bras annulaire 91 du diffuseur 9. Le flux d'air 4 passe ensuite entre la jambe de renfort 53 et le bras annulaire 91 du diffuseur 9 qui forment une seconde restriction de passage avant de déboucher dans la cavité 44. La succession de deux restrictions suivies respectivement de deux cavités permet de diminuer la vitesse de l'air en contact avec le carter externe et donc de diminuer les échanges thermiques entre les carters et les flux d'air 4. Toutefois, les cavités 43 et 44 doivent avoir une section supérieure aux chicanes pour limiter les pertes de charges lorsque le flux d'air 4 est arrêté. La longueur L est comprise de préférence entre 0,5 et 5 fois la distance radiale R. Sur la figure 3a, les faces 55 et 56 de la jambe de renfort 53 sont cylindriques, l'axe du cylindre étant l'axe 200 de la turbomachine.

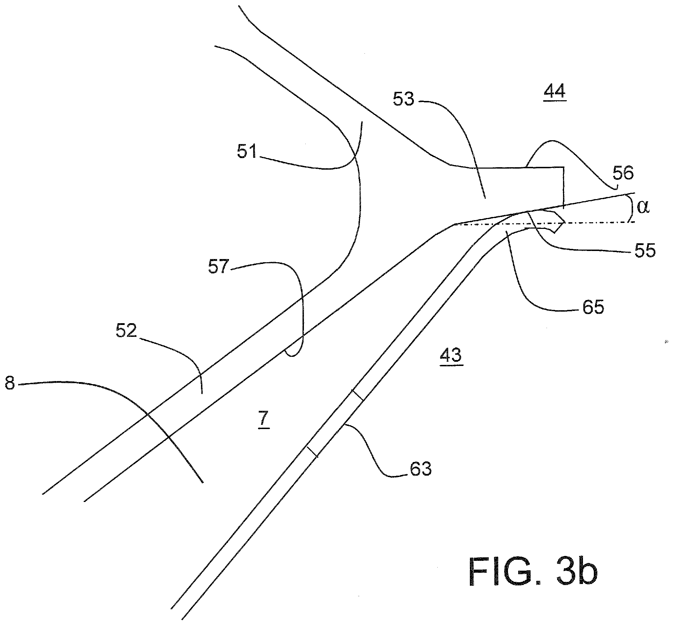

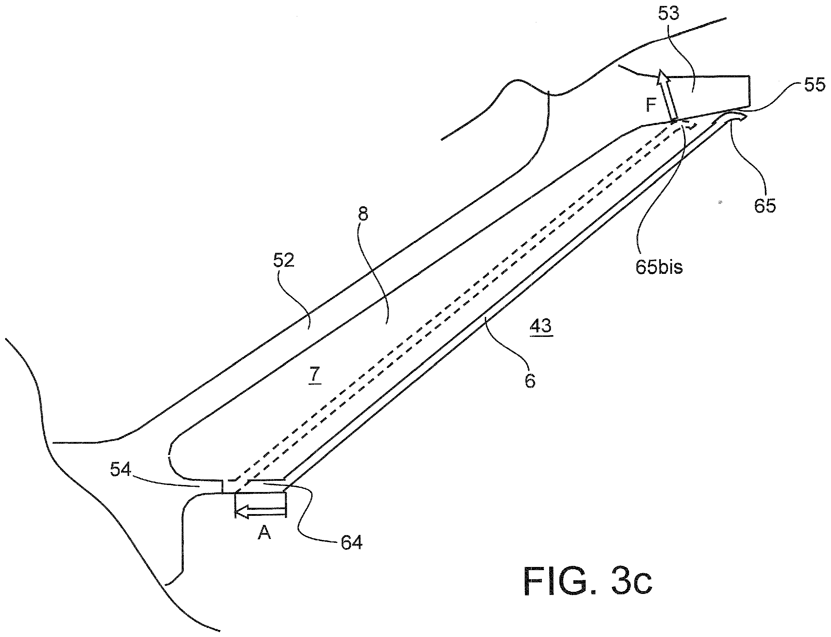

Alternativement, afin de garantir l'étanchéité entre la patte annulaire 65 et la jambe de renfort 53, la face intérieure 55 de la jambe de renfort 53 peut être inclinée d'un angle α par rapport à l'axe moteur 200 comme représenté sur les figures 3b et 3c. La face intérieure 55 de la jambe de renfort 53 est alors un cône dont le plus petit diamètre est orienté vers l'amont de la turbomachine. Préférentiellement, l'angle α est compris entre 5° et 15°.

La figure 3c montre comment l'introduction d'un angle α entre la face intérieure 55 de la jambe de renfort 53 et l'axe moteur 200 permet d'améliorer l'étanchéité entre la patte annulaire 65 et la jambe de renfort 53. La bride cylindrique 64 de la tôle de couverture 6 et la bride cylindrique 54 de l'anneau amortisseur sont liées par exemple par soudage TIG. La bride cylindrique 64 subit alors un retrait A dû au soudage. La tôle de couverture 6 et la patte annulaire 65 se déplacent également d'une distance A, la patte annulaire 65 se déplaçant en 65b. La patte annulaire 65 exerce alors un effort F, fonction de l'angle α et du déplacement A, sur la face intérieure 55. Le soudage de la liaison entre les brides cylindriques 64 et 54 et l'inclinaison de la face intérieure 55 permettent de garantir l'étanchéité du contact entre la patte annulaire 65 et la jambe de renfort 53.

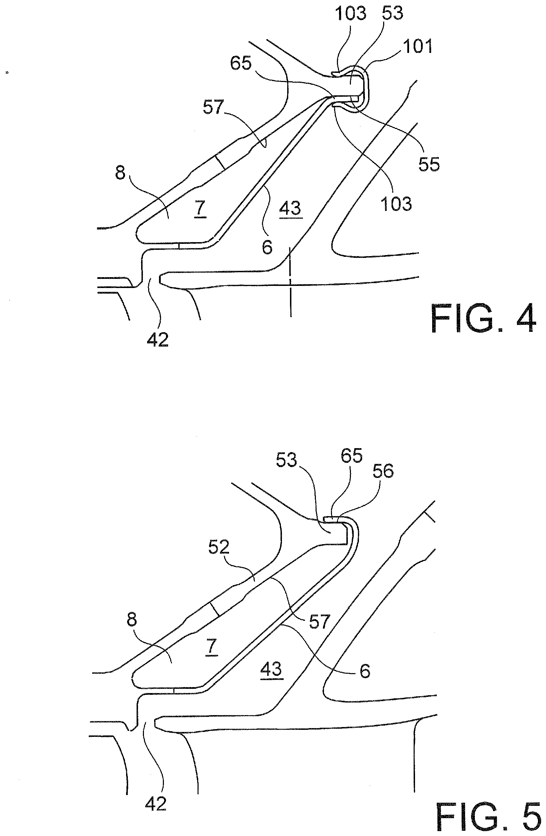

La figure 4 représente une première variante du premier mode de réalisation du dispositif de maîtrise de l'inertie thermique selon l'invention.
La tôle de couverture 6 est plaquée sur la jambe de renfort 53 de telle manière que le contact soit étanche. Le maintien du contact entre la patte annulaire 65 et la jambe de renfort 53 est assuré par un clip de rétention 101. Le clip de rétention 101 est un profilé métallique annulaire élastique de section constante en forme de oméga (Ω). Les deux pattes 103 du clip de rétention 101 se refermant naturellement par élasticité, le clip assure un contact permanent entre la tôle de couverture 6 et la face intérieure 55 de la jambe de renfort 53.

La figure 5 représente une deuxième variante du premier mode de réalisation du dispositif de maîtrise de l'inertie thermique selon l'invention.
Selon cette deuxième variante, l'extrémité aval de la tôle de couverture 6 est recourbée vers l'amont du compresseur et se prolonge par une patte annulaire 65 en appui sur la face externe 56 de la jambe de renfort 53. Les dilatations thermiques de l'anneau amortisseur 5 et de la tôle de couverture 6 tendent à resserrer la tôle de couverture 6 contre la surface interne de l'anneau amortisseur 5 et à assurer son maintien en contact avec la face externe 56 de la jambe de renfort 53.

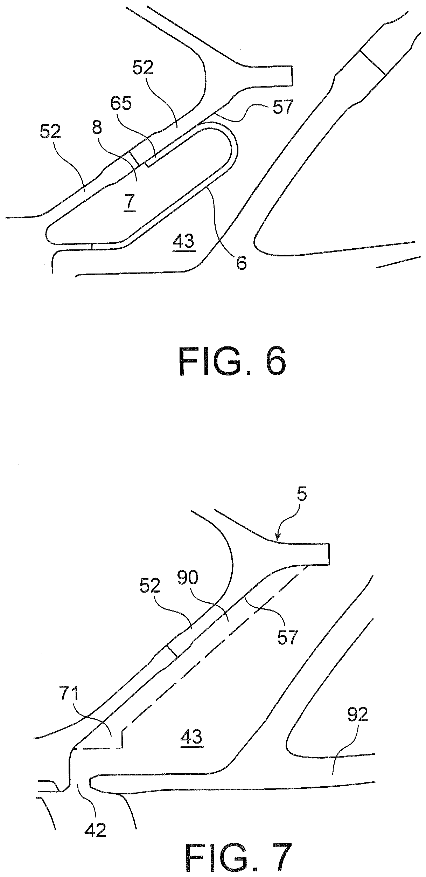

La figure 6 représente une troisième variante du premier mode de réalisation du dispositif de maîtrise de l'inertie thermique selon l'invention. La patte annulaire 65 de la tôle de couverture 6 est recourbée vers l'intérieur de la cavité 7 de manière à former un U qui vient en appui sur la surface interne 57 du bras intérieur 52. Les dimensions et l'épaisseur de la tôle sont choisies de telle manière que le contact entre les deux pièces soit étanche à l'air par effet ressort.

La figure 7 représente un second mode de réalisation du dispositif de maîtrise de l'inertie thermique selon l'invention. Une couche d'isolant thermique 90 est déposée sur la surface interne 57 du bras intérieur 52 de l'anneau amortisseur 5. Cette couche d'isolant comporte une extrémité amont 71 cylindrique parallèle à l'axe du compresseur et parallèle à la virole extérieure 92 du diffuseur 9. La couche d'isolant thermique peut être constituée par une mousse de polyuréthane chargé d'alumine et de silice telle que celle utilisée comme matériau abradable pour réaliser l'étanchéité entre les aubes mobiles 10 et les viroles fixes 23 en vis à vis. La couche d'isolant thermique est de préférence déposée par projection plasma puis usinée pour obtenir la forme désirée selon des procédés connus de l'homme du métier. De préférence, la couche d'isolant est déposée selon une couche uniforme et régulière et a une épaisseur comprise entre 0,5 et 4 mm.

Le dispositif de d'amélioration des jeux radiaux selon les différents modes de réalisation de l'invention est aisément adaptable à des turbomachines existantes notamment grâce aux différentes solutions d'accrochage de la tôle de couverture sur l'anneau amortisseur du premier mode de réalisation de l'invention et grâce au second mode de réalisation.

Ce dispositif permet également de réduire sensiblement la vitesse tangentielle des flux d'air prélevés dans l'environnement immédiat de l'anneau amortisseur.

Les différentes possibilités de mise en oeuvre du dispositif selon l'invention permettent d'envisager son application à toute partie de la turbomachine comportant un problème technique similaire. Par exemple un module turbine, haute ou basse pression, comportant un carter externe et un carter interne reliés par une pièce de faible masse en contact avec un flux d'air peut également recevoir un tel dispositif d'amélioration des jeux radiaux.

## Revendications

1. Module de turbomachine muni d'un dispositif d'amélioration des jeux radiaux, comportant un carter externe (22), un carter interne (21) traversé par un flux primaire (Fp) de turbomachine, et au moins un anneau amortisseur (5) reliant lesdits carters, ledit module comportant en outre, vers l'aval par rapport audit anneau amortisseur (5), une cavité annulaire (43) présentant un passage (42) assurant le prélèvement d'un flux (4) sur ledit flux primaire (Fp),
**caractérisé en ce que** le dispositif d'amélioration des jeux radiaux comporte un dispositif de maîtrise de l'inertie thermique de l'anneau amortisseur monté sur l'anneau amortisseur (5), vers l'aval par rapport à ce dernier, ce dispositif de maîtrise de l'inertie thermique comportant au moins une couche d'isolant thermique (8, 90), et délimitant au moins en partie, en aval de celui-ci, ladite cavité annulaire (43).

2. Module de turbomachine selon la revendication 1, **caractérisé en ce que** la couche d'isolant thermique (8, 90) est au contact d'une surface intérieure (57) d'un bras annulaire intérieur (52) de l'anneau amortisseur (5) .

3. Module de turbomachine selon la revendication 2, **caractérisé en ce que** le dispositif de maîtrise de l'inertie thermique comporte en outre une tôle de couverture (6) montée sur le bras annulaire intérieur (52) de l'anneau amortisseur (5) et une cavité (7) située entre la tôle de couverture (6) et le bras intérieur (52), et **en ce que** la couche d'isolant thermique (8, 90) est logée dans la cavité (7).

4. Module de turbomachine selon la revendication 3, **caractérisé en ce que** la tôle de couverture (6) comporte une ouverture (63) unique débouchant dans la cavité (7).

5. Module de turbomachine selon l'une des revendications 2 à 4, **caractérisé en ce que** l'isolant thermique est choisi parmi les matériaux suivants : air, fibre de verre, feutre de laine de silice.

6. Module de turbomachine selon l'une des revendications 3 à 5, **caractérisé en ce que** l'anneau amortisseur (5) comporte en outre une jambe de renfort cylindrique (53) prolongeant le bras annulaire intérieur (52) et **en ce que** la tôle de couverture (6) comporte :
- une extrémité amont (66) reliée à une extrémité inférieure (89) de l'anneau amortisseur (5) ; et
- une extrémité aval (67) reliée à la jambe de renfort cylindrique (53).

7. Module de turbomachine selon la revendication 6, **caractérisé en ce que** l'extrémité aval (67) de la tôle de couverture (6) comporte une patte annulaire (65) en appui sur une face intérieure (55) de la jambe de renfort (53).

8. Module de turbomachine selon la revendication 7, **caractérisé en ce que** la face intérieure (55) de la jambe de renfort (53) forme un angle (α) avec l'axe de la turbomachine (200) dont la valeur est comprise entre 5° et 15°.

9. Module de turbomachine selon la revendication 6, **caractérisé en ce que** l'extrémité aval (67) de la tôle de couverture (6) comporte une patte annulaire (65) en appui sur une face extérieure (56) de la jambe de renfort (53).

10. Module de turbomachine selon la revendication 6, **caractérisé en ce que** l'extrémité aval (67) de la tôle de couverture (6) comporte une patte annulaire (65) formant un U incurvé vers l'intérieur de la cavité (7), et en appui sur le bras intérieur (52).

11. Module de turbomachine selon la revendication 7, **caractérisé en ce qu'**il comporte en outre un clip de rétention (101) assurant le maintien de la patte annulaire (65) de la tôle de couverture (6) sur la face intérieure (55) de la jambe de renfort (53).

12. Module de turbomachine selon l'une des revendications 1 ou 2, **caractérisé en ce que** la couche d'isolant thermique est un revêtement thermique (90) déposé sur la surface intérieure (57) du bras intérieur (52) de l'anneau amortisseur (5).

13. Module de turbomachine selon la revendication 12, **caractérisé en ce que** le revêtement thermique (90) est un matériau abradable.

14. Utilisation du module de turbomachine selon l'une des revendications 1 à 13 au niveau du compresseur de la turbomachine.

15. Utilisation du module de turbomachine selon l'une des revendications 1 à 13 au niveau de la turbine de la turbomachine.

16. Turbomachine comportant au moins un module selon l'une des revendications 1 à 13.

## Patentansprüche

1. Turbotriebwerksmodul, das mit einer Vorrichtung zur Verbesserung des Radialspiels ausgerüstet ist, mit einem Außengehäuse (22), einem Innengehäuse (21), durch das ein Primärstrom (Fp) des Turbotriebwerks hindurchläuft, und mindestens einem Dämpferring (5), der die Gehäuse verbindet, wobei das Modul außerdem nach unten in Bezug auf den Dämpferring (5) einen ringförmigen Hohlraum (43) aufweist, der einen Durchgang (42) bildet, welcher die Entnahme eines Stromes (4) über dem Primärstrom (Fp) gewährleistet,
**dadurch gekennzeichnet, dass** die Vorrichtung zur Verbesserung des Radialspiels eine Vorrichtung zum Eindämmen der Wärmeträgheit des Dämpferringes umfasst, welche auf dem Dämpferring (5) diesem nachgeordnet angebracht ist, wobei diese Vorrichtung zum Eindämmen der Wärmeträgheit mindestens eine Wärmeisolierschicht (8, 90) aufweist und mindestens teilweise hinter dieser Vorrichtung den ringförmigen Hohlraum (43) begrenzt.

2. Turbotriebwerksmodul nach Anspruch 1, **dadurch gekennzeichnet, dass** die Wärmeisolierschicht (8, 90) in Kontakt mit einer Innenfläche (57) eines inneren ringförmigen Armes (52) des Dämpferringes (5) steht.

3. Turbotriebwerksmodul nach Anspruch 2, **dadurch gekennzeichnet, dass** die Vorrichtung zum Eindämmen der Wärmeträgheit weiterhin ein Abdeckblech (6), das auf dem inneren ringförmigen Arm (52) des Dämpferringes (5) angebracht ist, und einen Hohlraum (7) umfasst, der zwischen dem Abdeckblech (6) und dem inneren Arm (52) liegt, und dass die Wärmeisolierschicht (8, 90) in dem Hohlraum (7) untergebracht ist.

4. Turbotriebwerksmodul nach Anspruch 3, **dadurch gekennzeichnet, dass** das Abdeckblech (6) eine einzige Öffnung (63) aufweist, die in den Hohlraum (7) mündet.

5. Turbotriebwerksmodul nach einem der Ansprüche 2 bis 4, **dadurch gekennzeichnet, dass** die Wärmeisolierung aus den folgenden Stoffen ausgewählt ist: Luft, Glasfaser, Kieselsäurewollfilz.

6. Turbotriebwerksmodul nach einem der Ansprüche 3 bis 5, **dadurch gekennzeichnet, dass** der Dämpferring (5) weiterhin eine zylinderförmige Verstärkungsstrebe (53) aufweist, die den inneren ringförmigen Arm (52) verlängert, und dass das Abdeckblech (6) Folgendes aufweist:
- ein vorderes Ende (66), das mit einem unteren Ende (89) des Dämpferringes (5) verbunden ist; und
- ein hinteres Ende (67), das mit der zylinderförmigen Verstärkungsstrebe (53) verbunden ist.

7. Turbotriebwerksmodul nach Anspruch 6, **dadurch gekennzeichnet, dass** das hintere Ende (67) des Abdeckblechs (6) eine ringförmige Lasche (65) aufweist, die auf einer Innenfläche (55) der Verstärkungsstrebe (53) aufliegt.

8. Turbotriebwerksmodul nach Anspruch 7, **dadurch gekennzeichnet, dass** die Innenfläche (55) der Verstärkungsstrebe (53) einen Winkel (α) mit der Achse des Turbotriebwerks (200) bildet, dessen Wert zwischen 5° und 15° liegt.

9. Turbotriebwerksmodul nach Anspruch 6, **dadurch gekennzeichnet, dass** das hintere Ende (67) des Abdeckblechs (6) eine ringförmige Lasche (65) aufweist, die auf einer Außenfläche (56) der Verstärkungsstrebe (53) aufliegt.

10. Turbotriebwerksmodul nach Anspruch 6, **dadurch gekennzeichnet, dass** das hintere Ende (67) des Abdeckblechs (6) eine ringförmige Lasche (65) aufweist, die ein zum Inneren des Hohlraumes (7) hin gekrümmtes U bildet und auf dem inneren Arm (52) aufliegt.

11. Turbotriebwerksmodul nach Anspruch 7, **dadurch gekennzeichnet, dass** es weiterhin eine Halteklammer (101) aufweist, die die Beibehaltung der ringförmigen Lasche (65) des Abdeckblechs (6) auf der Innenfläche (55) der Verstärkungsstrebe (53) sicherstellt.

12. Turbotriebwerksmodul nach einem der Ansprüche 1 oder 2, **dadurch gekennzeichnet, dass** die Wärmeisolierschicht aus einer Wärmeverkleidung (90) besteht, die auf der Innenfläche (57) des inneren Armes (52) des Dämpferringes (5) angebracht ist.

13. Turbotriebwerksmodul nach Anspruch 12, **dadurch gekennzeichnet, dass** die Wärmeverkleidung (90) aus einem abschleifbaren Material besteht.

14. Verwendung des Turbotriebwerksmoduls nach einem der Ansprüche 1 bis 13 in Bezug auf den Kompressor des Turbotriebwerkes.

15. Verwendung des Turbotriebwerksmoduls nach einem der Ansprüche 1 bis 13 in Bezug auf die Turbine des Turbotriebwerkes.

16. Turbotriebwerk mit mindestens einem Modul nach einem der Ansprüche 1 bis 13.

## Claims

1. Turbomachine module comprising a device to improve radial clearances, comprising an outer casing (22), an inner casing (21) through which a primary turbomachine flow (Fp) passes, and at least one shock absorbing ring (5) connecting said casings, said module also comprising an annular cavity (43) on the downstream side of said shock absorbing ring (5), with a passage (42) formed in it through which an airflow (4) is drawn off from said primary flow (Fp),
**characterised in that** the device to improve radial clearances comprises a thermal inertia control device mounted on the shock absorbing ring (5), downstream from it, this thermal inertia control device comprising at least one coat of thermal insulation (8, 90), and at least partly delimiting said annular cavity (43), on the downstream side of it.

2. Turbomachine module according to claim 1, **characterised in that** the coat of thermal insulation (8, 90) is in contact with an inner surface (57) of an annular arm (52) inside the shock absorbing ring (5).

3. Turbomachine module according to claim 2, **characterised in that** the thermal inertia control device also comprises a cover plate (6) mounted on the annular arm (52) inside the shock absorbing ring (5) and a cavity (7) located between the cover plate (6) and the inner arm (52), and **in that** the layer of thermal insulation (8, 90) is housed in the cavity (7).

4. Turbomachine module according to claim 3, **characterised in that** the cover plate (6) comprises a single opening (63) opening up in the cavity (7).

5. Turbomachine module according to any of claims 2 to 4, **characterised in that** the thermal insulation is chosen from among the following materials: air, glass fibre, silica wool felt.

6. Turbomachine module according to any of claims 3 to 5, **characterised in that** the shock absorbing ring (5) also comprises a cylindrical stiffener leg (53) extending the inner annular arm (52) and **in that** the cover plate (6) comprises:
- an upstream end (66) connected to a lower end (89) of the shock absorbing ring (5); and
- a downstream end (67) connected to the cylindrical stiffener leg (53).

7. Turbomachine module according to claim 6, **characterised in that** the downstream end (67) of the cover plate (6) comprises an annular tab (65) bearing on an inner face (55) of the stiffener leg (53).

8. Turbomachine module according to claim 7, **characterised in that** the inner face (55) of the stiffener leg (53) forms an angle (α) with the centreline of the turbomachine (200), the value of which is between 5° and 15°.

9. Turbomachine module according to claim 6, **characterised in that** the downstream end (67) of the cover plate (6) comprises an annular tab (65) bearing on an outer face (56) of the stiffener leg (53).

10. Turbomachine module according to claim 6, **characterised in that** the downstream end (67) of the cover plate (6) comprises an annular tab (65) forming a U curved towards the inside of the cavity (7), and bearing on the inner arm (52).

11. Turbomachine module according to claim 7, **characterised in that** it also comprises a retention clip (101) holding the annular tab (65) of the cover plate (6) on the inner face (55) of the stiffener leg (53) .

12. Turbomachine module according to claim 1 or 2, **characterised in that** the coat of thermal insulation is a thermal layer (90) deposited on the inner surface (57) of the inner arm (52) of the shock absorbing ring (5).

13. Turbomachine module according to claim 12, **characterised in that** the thermal layer (90) is an abradable material.

14. Use of the turbomachine module according to any of claims 1 to 13 at the compressor of the turbomachine.

15. Use of the turbomachine module according to any of claims 1 to 13 at the turbine of the turbomachine.

16. Turbomachine comprising at least one module according to any of claims 1 to 13.
